# EUROPEAN PATENT APPLICATION

(11) **EP 4 611 052 A1**
(43) Date of publication of application: **03.09.2025**
(21) Application number: 23882813.1
(22) Date of filing: 23.06.2023
(51) Int. Cl.: H01M 4/13, H01M 4/62, H01M 4/36, H01M 4/38, H01M 10/052, H01M 4/02

(54) **NEGATIVE ELECTRODE FOR ALL-SOLID-STATE BATTERY AND ALL-SOLID-STATE BATTERY INCLUDING SAME**

(30) Priority: 24.10.2022 KR 20220137621
(71) Applicant: SAMSUNG SDI CO., LTD., Yongin-si, Gyeonggi-do 17084 (KR)
(72) Inventor: YANG, Jinhoon, Yongin-si, Gyeonggi-do 17084 (KR); SHIN, Hyuksoo, Yongin-si, Gyeonggi-do 17084 (KR); SOHN, Juhee, Yongin-si, Gyeonggi-do 17084 (KR); LEE, Jungho, Yongin-si, Gyeonggi-do 17084 (KR); JUNG, Sungwon, Yongin-si, Gyeonggi-do 17084 (KR)
(74) Representative: Gulde & Partner
(86) International application number: PCT/KR2023/008794
(87) International publication number: WO 2024/090705

(57) **Abstract**

The present invention relates to a negative electrode for an all-solid-state battery including same. This negative electrode for an all-solid-state battery includes a current collector and a negative electrode catalyst layer located on the current collector and including an amorphous carbon, metal and clay.

## Description

### TECHNICAL FIELD

A negative electrode for an all-solid-state battery and an all-solid-state battery including the same are disclosed.

### BACKGROUND ART

Recently, the rapid supplement of electronic devices such as mobile phones, laptop computers, and electric vehicles, using batteries require surprising increases in demands for rechargeable batteries with relatively high capacity and lighter weight. Particularly, a rechargeable lithium battery has recently drawn attention as a driving power source for portable devices, as it has lighter weight and high energy density. Accordingly, research and development to improve the performance of rechargeable lithium batteries is being actively conducted.

An all-solid-state battery among rechargeable lithium batteries refers to a battery in which all materials are solid, and in particular, a battery using a solid electrolyte. One way to increase the energy density of these all-solid-state batteries is to use lithium metal as a negative electrode, however, in this case, there are problems due to lithium volume expansion and irreversible dendrite growth during charge and discharge.

To solve these problems, a method of configuring the negative electrode by forming a layer in which lithium is deposited on the negative electrode current collector during charging and discharging, without using lithium metal itself, is being studied. However, this method is not suitable because it causes low power characteristics and excessive occurrence of short-circuit phenomena.

### DETAILED DESCRIPTION OF THE INVENTION

### TECHNICAL PROBLEM

An embodiment provides a negative electrode for an all-solid-state battery exhibiting excellent electrochemical properties.

Another embodiment provides an all-solid-state battery including the negative electrode.

### TECHNICAL SOLUTION

An embodiment provides a negative electrode for an all-solid-state battery, including: a current collector; and a negative electrode catalyst layer located on the current collector and including amorphous carbon, a metal, and clay.

An amount of the clay may be 1 wt% to 30 wt%, or 10 wt% to 25 wt%, based on 100 wt% of the total negative electrode catalyst layer.

The clay may be montmorilonite (MMT), halloysite, bentonite, kaolinite, saponite, surface-modified clay, pyrophylite-talc, fluorohectorite, vermiculite, illite, mica, brittle mica, or a combination thereof.

The metal may be Ag, Au, Sn, Zn, Al, Mg, Ge, Cu, In, Ni, Bi, Pt, Pd, or a combination thereof.

The amorphous carbon may be carbon black, acetylene black, denka black, ketjen black, furnace black, activated carbon, or a combination thereof. The amorphous carbon may be carbon black, acetylene black, denka black, ketjen black, or a combination thereof.

A BET specific surface area of the clay may be 5 m²/g to 500 m²/g.

An amount of the above metal may be 1 wt% to 50 wt% based on 100 wt% of the total weight of the negative electrode catalyst layer.

An amount of the amorphous carbon may be 20 wt% to 98 wt% based on 100 wt% of the total weight of the negative electrode catalyst layer.

Another embodiment provides an all-solid-state battery including the negative electrode; a positive electrode; and a solid electrolyte layer between the negative electrode and the positive electrode.

The negative electrode may further include a lithium-containing layer between the current collector and the negative electrode catalyst layer.

### ADVANTAGEOUS EFFECTS

The negative electrode for an all-solid-state battery according to an embodiment may exhibit excellent electrochemical characteristics.

### BRIEF DESCRIPTION OF THE DRAWINGS

FIG. 1 is a schematic view of an all-solid-state battery according to an embodiment.
FIG. 2 is a schematic viewH of an all-solid-state battery according to another embodiment.
FIG. 3 is a cross-sectional FE-SEM photograph of the negative electrode manufactured according to Example 1.
FIG. 4 is a photograph and graph showing the EDAX results of the negative electrode manufactured according to Example 1.
FIG. 5 is a photograph and graph showing the EDAX results of the negative electrode manufactured according to Comparative Example 1.
FIG. 6 is a graph showing the overvoltage results of all-solid-state half-cells fabricated according to Examples 3 and 4 and Comparative Examples 2 and 3.
FIG. 7 is a graph showing the discharge characteristics at 2nd cycle of Examples 1 to 5.
FIG. 8 is a graph showing the charging characteristics at 2^{nd} cycle of Examples 1 to 5.

### BEST MODE FOR PERFORMING INVENTION

Hereinafter, embodiments of the present invention will be described in detail. However, these embodiments are merely examples, the present invention is not limited thereto, and the present invention is defined by the scope of claims.

The terminology used herein is used to describe embodiments only, and is not intended to limit the present disclosure. Expressions in the singular include a plurality of expressions unless the context clearly dictates otherwise.

As used herein, "combination thereof" means a mixture, a laminate, a composite, a copolymer, an alloy, a blend, a reaction product, and the like of the constituents.

Here, the term "comprise," "include" or "have" are intended to designate that the performed characteristics, numbers, step, constituted elements, or a combination thereof is present, but it should be understood that the possibility of presence or addition of one or more other characteristics, numbers, steps, constituted element, or a combination do not be precluded in advance.

The drawing shows that the thickness is enlarged in order to clearly show the various layers and regions, and the same reference numerals are given to similar parts throughout the specification. It will be understood that when an element such as a layer, film, region, or substrate is referred to as being "on" another element, it may be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

Herein, "or" is not to be construed as an exclusive meaning, for example, "A or B" is construed to include A, B, A+B, and the like.

Unless otherwise defined in this specification, particle diameter or size may be an average particle diameter. This average particle dimeter refers to the average particle diameter (D50), which means the diameter of particles with a cumulative volume of 50 volume% in the particle size distribution. The average particle diameter (D50) may be measured by methods well known to those skilled in the art, for example, by measuring with a particle size analyzer, a transmission electron microscope or scanning electron microscope, or a scanning electron microscope. Alternatively, a dynamic light-scattering measurement device is used to perform a data analysis, and the number of particles is counted for each particle size range, and from this, the average particle diameter (D50) value may be easily obtained through a calculation.

A negative electrode for an all-solid-state battery according to an embodiment includes a current collector; and a negative electrode catalyst layer located on the current collector and including amorphous carbon, a metal, and clay.

In an embodiment, the negative electrode catalyst layer refers to a layer that helps lithium ions deintercalated from the positive electrode active material during charging and discharging of an all-solid-state battery to move toward the negative electrode and be precipitated on the surface of a current collector. That is, a lithium deposition layer is formed between the current collector and the negative electrode catalyst layer due to the precipitation of lithium ions, and the lithium deposition layer acts as a negative electrode active material, and such a negative electrode is generally called a deposition-type negative electrode.

If the negative electrode catalyst layer including amorphous carbon and metal includes clay, the clay may improve the mobility of lithium ions and form a stable path, thereby enabling uniform lithium layer formation and suppressing lithium dendrite formation. In general, if charging and discharging an all-solid-state battery, an overvoltage may occur at the negative electrode, which may cause excessive lithium dendrites to form on the surface of the negative electrode, and these dendrites may penetrate the electrolyte and come into contact with the positive electrode, which may cause a problem in that the cycle-life is reduced, however, the negative electrode according to an embodiment may effectively prevent it. In addition, if the negative electrode catalyst layer includes clay, the charge/discharge efficiency may be improved.

In an embodiment, an amount of the clay may be 1 wt% to 30 wt%, 5 wt% to 30 wt%, or 10 wt% to 25 wt% based on 100 wt% of the total negative electrode catalyst layer. At this time, if the amount of the clay is within the above range, the lithium dendrite prevention effect and charge/discharge improvement effect due to the use of clay may be more effectively obtained.

The clay may be montmorilonite (MMT), halloysite, bentonite, kaolinite, saponite, surface-modified clay, pyrophylite-talc, fluorohectorite, vermiculite, illite, mica, brittle mica or a combination thereof. The surface-modified clay may be any clay known in the art as a surface-modified clay, such as clay whose surface is modified by plasma treatment, clay having hydroxy bonded to the surface, clay modified with a quaternary ammonium salt, etc.

The BET surface area of the clay may be 5 m²/g to 500 m²/g, 25 m²/g to 300 m²/g, or 50 m²/g to 250 m²/g. If the specific surface area of the clay is within the above range, the role of the clay may be performed more appropriately, so that uniform lithium may be formed. If the specific surface area of the clay is less than 5 m²/g, the surface area interacting with lithium ions is small, and thus the clay may not perform its role well, and if it exceeds 500 m²/g, the specific surface area is too high if producing the negative electrode slurry, causing nonuniformity of the slurry and the surface area path of the lithium ions may become long, which may slightly increase the overvoltage.

The effect of including such clay may be obtained if used in a negative electrode catalyst layer containing amorphous carbon and metal together. If the clay is used in the negative electrode catalyst layer including only amorphous carbon, it is not suitable because a short circuit occurs during charging and discharging.

In an embodiment, the metal included in the negative electrode catalyst layer may be Ag, Au, Sn, Zn, Al, Mg, Ge, Cu, In, Ni, Bi, Pt, Pd, or a combination thereof. In an embodiment, the metal may be Ag. Because the negative electrode catalyst layer includes the metal together with the clay, the electrical conductivity of the negative electrode may be further improved without causing a short circuit during charge and discharge.

The metal may be a nanoparticle, and a size of the metal nanoparticle may be, for example, an average size of 5 nm to 80 nm, but a nanometer size may be suitable. By using the metal nanoparticles having such nano-size, the battery characteristics (e.g., cycle-life characteristics) of the all-solid-state battery may be further improved. If the metal particle size increases to the micrometer level, the uniformity of the metal particles in the negative electrode catalyst layer decreases, which is not suitable because the current density in a specific area increases and the cycle-life characteristics may deteriorate.

The amorphous carbon may be carbon black, acetylene black, denka black, ketjen black, furnace black, activated carbon, or a combination thereof. An example of the carbon black is Super P (Timcal). The amorphous carbon may be carbon black, acetylene black, denka black, ketjen black, or a combination thereof.

In the negative electrode catalyst layer according to an embodiment, the amount of the metal may be 1 wt% to 50 wt%, 3 wt% to 30 wt%, 4 wt% to 25 wt%, 5 wt% to 20 wt%, or 5 wt% to 15 wt% based on 100 wt% of the weight of the negative electrode catalyst layer.

Additionally, the carbon-based material may be present in an amount of 20 wt% to 98 wt%, 40 wt% to 95 wt%, 60 wt% to 95 wt%, 80 wt% to 95 wt%, or 85 wt% to 95 wt% based on 100 wt% of the total weight of the negative electrode catalyst layer.

If the amount of the metal or the carbon-based material is within the above range, the metal may be evenly dispersed in the carbon-based material. In addition, if the amount of the metal and the carbon-based material is within the above range, the lithium ions deintercalated from the positive electrode active material during charging move toward the negative electrode, and the lithium deposition layer is substantially mostly formed between the current collector and the negative electrode layer, and thus, if lithium precipitation occurs on the surface of the negative electrode layer, problems such as short-circuit problems, problems due to side reactions with the electrolyte, or problems of crack occurrence on the negative electrode side may be effectively suppressed.

Additionally, the amorphous carbon may be a single particle or an aggregate having a secondary particle in which primary particles are aggregated. If the amorphous carbon is a single particle, it may be an amorphous carbon particle having an average particle diameter of less than or equal to 100 nm, for example, a nanosize of 10 nm to 100 nm.

In addition, if the amorphous carbon is an aggregate, the particle size of the primary particle may be 20 nm to 100 nm, and the particle size of the secondary particle may be 1 µm to 20 µm.

In an embodiment, the particle size of the primary particles may be greater than or equal to 20 nm, greater than or equal to 30 nm, greater than or equal to 40 nm, greater than or equal to 50 nm, greater than or equal to 60 nm, greater than or equal to 70 nm, greater than or equal to 80 nm, or greater than or equal to 90 nm, and less than or equal to 100 nm, less than or equal to 90 nm, less than or equal to 80 nm, less than or equal to 70 nm, less than or equal to 60 nm, less than or equal to 50 nm, less than or equal to 40 nm, or less than or equal to 30 nm.

In an embodiment, the particle size of the secondary particles may be greater than or equal to 1 µm, greater than or equal to 3 µm, greater than or equal to 5 µm, greater than or equal to 7 µm, greater than or equal to 10 µm, or greater than or equal to 15 µm, and less than or equal to 20 µm, less than or equal to 15 µm, less than or equal to 10 µm, less than or equal to 7 µm, less than or equal to 5 µm, or less than or equal to 3 µm.

The shape of the primary particles may be spherical, elliptical, plate-shaped, and a combination thereof, and in an embodiment, the shape of the primary particles may be spherical, elliptical, and a combination thereof.

The negative electrode catalyst layer may further include a binder.

The binder may include a non-aqueous binder, an aqueous binder, or a combination thereof.

The non-aqueous binder may include, for example, polyvinylchloride, carboxylated polyvinylchloride, polyvinylfluoride, an ethylene oxide-containing polymer, an ethylene propylene copolymer, polystyrene, polyvinylpyrrolidone, polyurethane, polytetrafluoroethylene, polyvinylidene fluoride, polyethylene, polypropylene, polyamideimide, polyimide, polyacrylate, or a combination thereof.

The aqueous binder may include a rubber-based binder or a polymer resin binder. The rubber binder may be selected from a styrene-butadiene rubber, an acrylated styrene-butadiene rubber, an acrylonitrile-butadiene rubber, an acrylic rubber, a butyl rubber, a fluorine rubber, and a combination thereof. The polymer resin binder may be selected from polyethylene oxide, polyvinylpyrrolidone, polyepichlorohydrin, polyphosphazene, polyacrylonitrile, an ethylene propylene diene copolymer, polyvinylpyridine, chlorosulfonated polyethylene, latex, a polyester resin, an acrylic resin, a phenol resin, an epoxy resin, polyvinyl alcohol, and a combination thereof.

If using an aqueous binder as the negative binder, a thickener capable of imparting viscosity may be used together, and the thickener may include, for example, a cellulose-based compound. The cellulose-based compound may include carboxymethyl cellulose, hydroxypropylmethyl cellulose, methyl cellulose, an alkali metal salt thereof, or a combination thereof. The alkali metal may be Na, K, or Li. The amount of such thickener used may be 0.1 parts by weight to 3 parts by weight based on 100 parts by weight of the negative electrode active material. The cellulose-based compound may also act as a binder.

The binder is not limited thereto, and any binder used in the relevant technical field may be used, and the amount of the binder may also be appropriately adjusted.

The binder may be included in an amount of 1 to 15 wt% based on 100 wt% of the total negative electrode catalyst layer, and for example, the binder may be included in an amount of greater than or equal to 1 wt%, greater than or equal to 2 wt%, greater than or equal to 3 wt%, greater than or equal to 4 wt%, greater than or equal to 5 wt%, greater than or equal to 6 wt%, greater than or equal to 7 wt%, greater than or equal to 8 wt%, greater than or equal to 9 wt%, greater than or equal to 10 wt%, greater than or equal to 11 wt%, greater than or equal to 12 wt%, greater than or equal to 13 wt% or greater than or equal to 14 wt%, and less than or equal to 15 wt%, less than or equal to 14 wt%, less than or equal to 13 wt%, less than or equal to 12 wt%, less than or equal to 11 wt%, less than or equal to 10 wt%, less than or equal to 9 wt%, less than or equal to 8 wt%, less than or equal to 7 wt%, less than or equal to 6 wt%, less than or equal to 5 wt%, less than or equal to 4 wt%, less than or equal to 3 wt%, or less than or equal to 2 wt% based on 100 wt% of the total negative electrode catalyst layer.

If the binder is included in the negative electrode catalyst layer of the all-solid-state battery within the above amount range, the electrical resistance and adhesive strength may be improved, thereby improving the characteristics (battery capacity and power characteristics) of the all-solid-state battery.

The negative electrode catalyst layer may further include an additive such as a filler, a dispersant, or an ion conductive material. The filler, dispersant, ion conductive material, etc. that may be included in the negative electrode catalyst layer may be known materials generally used in all-solid-state batteries.

According to an embodiment, the negative electrode may further include a lithium-containing layer between the current collector and the negative electrode catalyst layer.

Because the above lithium-containing layer is a metal layer including lithium, it may act as a lithium reservoir.

The lithium-containing layer may be a lithium deposition layer in which lithium ions deintercalated from the positive electrode active material during charging move toward the negative electrode and are deposited on the surface of the current collector. In this case, the lithium-containing layer may be referred to as a lithium deposition layer.

The lithium-containing layer may be a layer including lithium or a lithium alloy.

The lithium alloy includes lithium and may also include a metal capable of being alloyed with lithium. The metal capable of being alloyed with the lithium may be Ag, Au, Mg, In, Si, Sn, Al, Ge, Pb, Bi, Sb, a Si-Y alloy (wherein Y is an alkali metal, an alkaline earth metal, a Group 13 element, a Group 14 element, a transition metal, a rare earth element, or a combination thereof, but not Si), a Sn-Y alloy (wherein Y is an alkali metal, an alkaline earth metal, a Group 13 element, a Group 14 element, a transition metal, a rare earth element or a combination thereof, but not Sn), etc. The element Y may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof.

A thickness of the lithium-containing layer may be 1 µm to 1000 µm, 1 µm to 500 µm, 1 µm to 200 µm, 1 µm to 150 µm, 1 µm to 100 µm, or 1 µm to 50 µm. If the thickness of the lithium-containing layer is within the above range, it may properly function as a lithium reservoir and may further improve its cycle-life.

If the lithium-containing layer is a lithium deposition layer, this lithium deposition layer may be formed if lithium ions are deintercalated from the positive electrode active material during charging after the all-solid-state battery is manufactured, pass through the solid electrolyte, and move toward the negative electrode, resulting in lithium precipitation and deposition on the negative electrode current collector.

The charging process may be a formation process performed 1 to 3 times at 0.05 C to 1 C at about 25 °C to 50 °C. Because lithium included in the lithium-containing layer is ionized and moves toward the positive electrode during discharge, the lithium may be used as a negative electrode active material.

In an embodiment, because the lithium-containing layer is present between the current collector and the negative electrode active material layer, the negative electrode catalyst layer may serve as a protective layer for the lithium-containing layer, thereby suppressing the precipitation growth of lithium dendrites. As a result, short circuiting and capacity reduction of the all-solid-state battery may be suppressed, and as a result, the cycle-life of the all-solid-state battery may be improved.

The current collector may include, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may be in the form of a foil or sheet. A thickness of the negative electrode current collector may be 1 µm to 20 µm, 5 µm to 15 µm, or 7 µm to 10 µm.

The current collector may include a metal substrate and may further include a thin film formed on the substrate. The thin film may include an element that may form an alloy with lithium, and may be, for example, gold, silver, zinc, tin, indium, silicon, aluminum, bismuth, or a combination thereof, but is not limited thereto, and in the technical field, any element that may form an alloy with lithium may be used. If the current collector further includes the thin film and the lithium-containing layer is formed by precipitating during charging, a more flattened lithium-containing layer may be formed, thereby further improving the cycle-life of the all-solid-state battery.

A thickness of the thin film may be 1 nm to 800 nm, 10 nm to 700 nm, 50 nm to 600 nm, or 100 nm to 500 nm. If the film thickness is within the above range, the cycle-life characteristics may be further improved.

Another embodiment provides an all-solid-state battery including the negative electrode, a positive electrode, and a solid electrolyte layer between the negative electrode and the positive electrode.

The solid electrolyte in the solid electrolyte layer may be an inorganic solid electrolyte such as a sulfide-based solid electrolyte, an oxide-based solid electrolyte, or a halide-based solid electrolyte, or a solid polymer electrolyte.

In an embodiment, the sulfide-based solid electrolyte may be, for example Li₂S-P₂S₅, Li₂S-P₂S₅-LiX (wherein X is a halogen element, for example I or Cl), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S5-ZₘSₙ (wherein m and n are integers of 0 or more and 12 or less and Z is one of Ge, Zn, or Ga), Li₂S-GeS₂, Li₂S-SiS₂-Li₃PO₄, Li₂S-SiS₂-LiₚMO_{q} (wherein p and q are each 0 or more and 12 or less and M is one of P, Si, Ge, B, Al, Ga, or In), or LiₐM_{b}P_{c}S_{d}Aₑ (wherein a, b, c, d, and e are each 0 or more and 12 or less, M is Ge, Sn, Si, or a combination thereof, and A is one of F, Cl, Br, or I). For example, it may be, for example, Li₇₋ₓPS₆₋ₓFₓ (0 ≤ x ≤ 2), Li₇₋ₓPS₆₋ₓClₓ (0 ≤ x ≤ 2), Li₇₋ₓPS₆₋ₓBrₓ (0 ≤ x ≤ 2), or Li₇₋ₓPS₆₋ₓIₓ (0 ≤ x ≤ 2). In addition, specifically, it may be Li₃PS₄, Li₇P₃S₁₁, Li₇PS₆, Li₆PS₅Cl, Li₆PS₅Cl, Li₆PS₅I, Li₆PS₅Br, Li_{5.8}PS_{4.8}Cl_{1.2}, Li_{6.2}PS_{5.2}Br_{0.8}, and the like.

For example, the sulfide-based solid electrolyte may be an argyrodite-type sulfide-based solid electrolyte. The sulfide-based solid electrolyte may be, for example, LiₐM_{b}P_{c}S_{d}Aₑ (wherein a, b, c, d and e are all 0 or more and 12 or less, M is Ge, Sn, Si, or a combination thereof, and A is F, Cl, Br, or I), and specifically, Li₃PS₄, Li₇P₃S₁₁, Li₇PS₆, Li₆PS₅Cl, Li₆PS₅Br, Li₆PS₅I, Li_{5.8}PS_{4.8}Cl_{1.2}, Li_{6.2}PS_{5.2}Br_{0.8}, etc.

The sulfide-based solid electrolyte may be amorphous, crystalline, or a mixed state thereof. The sulfide-based solid electrolyte may be obtained by, for example, mixing Li₂S and P₂S₅ in a mole ratio of 50:50 to 90:10 or 50:50 to 80:20. Within the above mixing ratio range, a sulfide-based solid electrolyte having excellent ionic conductivity may be prepared. The ionic conductivity may be further improved by adding SiS₂, GeS₂, B₂S₃, and the like as other components thereto. Mechanical milling or a solution method may be applied as a mixing method. The mechanical milling is to make starting materials into particulates by putting the starting materials, ball mills, and the like in a reactor and fervently stirring them. The solution method may be performed by mixing the starting materials in a solvent to obtain a solid electrolyte as a precipitate. Additionally, additional firing may be performed after mixing. If additional firing is performed, the crystals of the solid electrolyte may become more rigid.

Of course, a commercially available solid electrolyte may be used as the sulfide-based solid electrolyte.

The oxide-based solid electrolyte may be, for example, Li₁₊ₓTi₂₋ₓAl(PO₄)₃ (LTAP) (0≤x≤4), Li_{1+x+y}AlₓTi₂₋ₓSi_{y}P_{3-y}O₁₂ (0<x<2, 0 ≤ y<3), BaTiO₃, Pb(Zr,Ti)O₃ (PZT), Pb₁₋ₓLaₓZr_{1-y}Ti_{y}O₃ (PLZT) (0 ≤ x<1, 0 ≤ y<1), Pb(Mg₃Nb_{2/3})O₃-PbTiO₃ (PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, lithium phosphate (Li₃PO₄), lithium titanium phosphate (LiₓTi_{y}(PO₄)₃, 0<x<2, 0<y<3), Li_{1+x+y}(Al, Ga)ₓ(Ti, Ge)₂₋ₓSi_{y}P_{3-y}O₁₂ (0 ≤ x ≤ 1, and 0 ≤ y ≤ 1), lithium lanthanum titanate (LiₓLa_{y}TiO₃, 0<x<2, and 0<y<3), Li₂O, LiAlO₂, Li₂O-Al₂O₃-SiO₂-P₂O₃-TiO₂-GeO₂-based ceramics, Garnet-based ceramics Li₃₊ₓLa₃M₂O₁₂ (M = Te, Nb, or Zr, and x is an integer of 1 to 10), or a mixture thereof.

The solid polymer electrolyte may include, for example, one or more selected from polyethylene oxide, poly(diallyldimethylammonium) trifluoromethanesulfonylimide (poly(diallyldimethylammonium)TFSI), Cu₃N, Li₃N, LiPON, Li₃PO₄ · Li₂S · SiS₂, Li₂S · GeS₂ · Ga₂S₃, Li₂O · 11Al₂O₃, Na₂O · 11Al₂O₃, (Na,Li)₁₊ₓTi₂₋ₓAlₓ(PO₄)₃ (0.1 ≤ x ≤ 0.9), Li₁₊ₓHf₂₋ₓAlₓ(PO₄)₃ (0.1 ≤ x ≤ 0.9), Na₃Zr₂Si₂PO₁₂, Li₃Zr₂Si₂PO₁₂, Na₅ZrP₃O₁₂, Na₅TiP₃O₁₂, Na₃Fe₂P₃O₁₂, Na₄NbP₃O₁₂, Na-silicates, Li_{0.3}La_{0.5}TiO₃, Na₅MSi₄O₁₂ (wherein M is a rare earth element of Nd, Gd, Dy, and the like), Li₅ZrP₃O₁₂, Li₅TiP₃O₁₂, Li₃Fe₂P₃O₁₂, Li₄NbP₃O₁₂, Li₁₊ₓ(M,Al,Ga)ₓ(Ge_{1-y}Ti_{y})₂₋ₓ(PO₄)₃ (x≤0.8, 0 ≤ y ≤ 1.0, and M is Nd, Sm, Eu, Gd, Tb, Dy, Ho, Er, Tm, or Yb), Li_{1+x+y}QₓTi₂₋ₓSi_{y}P_{3-y}O₁₂ (0<x≤0.4, 0<y≤0.6, and Q is Al or Ga), Li₆BaLa₂Ta₂O₁₂, Li₇La₃Zr₂O₁₂, Li₅La₃Nb₂O₁₂, Li₅La₃M₂O₁₂ (M is Nb or Ta), and Li₇₊ₓAₓLa₃₋ₓZr₂O₁₂ (0<x<3, and A is Zn).

The halide-based solid electrolyte may include a Li element, an M element (M is a metal other than Li), and an X element (X is a halogen). Examples of X may include F, Cl, Br, and I. In particular, in the halide-based solid electrolyte, at least one of Br and Cl is suitable as the above X. In addition, examples of M may include metal elements such as Sc, Y, B, Al, Ga, and In.

A composition of the halide-based solid electrolyte is not particularly limited, but may be represented by Li₆₋₃ₐMₐBr_{b}Cl_{c} (where M is a metal other than Li, 0<a<2, 0 ≤ b ≤ 6, 0 ≤ c ≤ 6, b+c=6). At this time, a may be 0.75 or more, 1 or more, and a may be 1.5 or less. The b may be 1 or more, and may be 2 or more. Additionally, the c may be 3 or more, and may be 4 or more. Specific examples of the halide-based solid electrolyte may be Li₃YBr₆, Li₃YCl₆, or Li₃YBr₂Cl₄.

The solid electrolyte may in the form of particles, and an average particle diameter (D50) may be less than or equal to 5.0 µm, for example, 0.1 µm to 5.0 µm, 0.5 µm to 5.0 µm, 0.5 µm to 4.0 µm, 0.5 µm to 3.0 µm, 0.5 µm to 2.0 µm, or 0.5 µm to 1.0 µm.

The solid electrolyte layer may further include a binder. At this time, the binder may be a styrene butadiene rubber, polytetrafluoroethylene, polyvinylidene fluoride, polyethylene, an acrylate-based polymer, or a combination thereof, but is not limited thereto, and anything used as a binder in the art may be used. The acrylate-based polymer may be butyl acrylate, polyacrylate, polymethacrylate, or a combination thereof.

The solid electrolyte layer may be formed by adding a solid electrolyte to a binder solution, coating it on a base film, and drying the resultant. The solvent of the binder solution may be isobutyryl isobutyrate, xylene, toluene, benzene, hexane, or a combination thereof. A forming process of the solid electrolyte layer is well known in the art, and thus a detailed description thereof will be omitted.

The positive electrode includes a positive electrode current collector and a positive electrode active material layer on one surface of the positive electrode current collector. The positive electrode active material layer may include a positive electrode active material. The positive electrode active material may be a lithiated compound capable of reversibly intercalating and deintercalating lithium ions, or may be a sulfur-based compound.

The lithiated compound may be, for example, at least one of a composite oxide of lithium and a metal selected from cobalt, manganese, nickel, and a combination thereof. Examples of the lithiated compound may include LiₐA_{1-b}B¹_{b}D¹₂ (0.90≤a≤1.8, 0≤b≤0.5); LiₐE_{1-b}B¹_{b}O_{2-c}D¹_{c} (0.90≤a≤1.8, 0≤b≤0.5, 0≤c≤0.5); LiₐE_{2-b}B¹_{b}O_{4-c}D¹_{c} (0.90 ≤a≤1.8, 0≤b≤0.5, 0≤c≤05); LiₐNi_{1-b-c}Co_{b}B¹_{c}D¹_{α} (0.90≤a≤1.8, 0≤b≤0.5, 0≤c≤0.5, 0<α≤2); LiₐNi_{1-b-c}Co_{b}B¹_{c}O_{2-α}F¹_{α} (0.90≤a≤1.8, 0≤b≤0.5, 0≤c≤0.5, 0<α<2); LiₐNi_{1-b-c}Co_{b}B'_{c}O_{2-α}F'₂ (0.90≤a≤1.8, 0≤b≤0.5, 0≤c≤0.5, 0<α<2); LiₐNi_{1-b-c}Mn_{b}B¹_{c}D¹_{α} (0.90≤a≤1.8, 0≤b≤0.5, 0≤c≤0.5, 0<α≤2); LiₐNi_{1-b-c}Mn_{b}B¹_{c}O_{2-α}F¹_{α} (0.90≤a≤1.8, 0≤b≤0.5, 0≤c≤0.5, 0<α<2); LiₐNi_{1-b-c}Mn_{b}B¹_{c}O_{2-α}F¹₂ (0.90≤a≤1.8, 0≤b≤0.5, 0≤c≤0.5, 0<α<2); LiₐNi_{b}E_{c}G_{d}O₂ (0.90≤a≤1.8, 0≤b≤0.9, 0≤c≤0.5, 0.001≤d≤0.1); LiₐNi_{b}Co_{c}L¹_{d}GₑO₂ (0.90≤a≤1.8, 0≤b≤0.9, 0≤c≤0.5, 0≤d≤0.5, 0.001≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMnG_{b}O₂ (0.90≤a≤1.8, 0.001≤b≤0.1); LiₐMn₂G_{b}O₄ (0.90≤a≤1.8, 0.001≤b≤0.1); QO₂; QS₂; LiQS₂; V₂O₅; LiV₂O₅; LiI¹O₂; LiNiVO₄; Li_{(3-f)}J₂(PO₄)₃(0≤f≤2); Li_{(3-f)}Fe₂(PO₄)₃(0≤f≤2); or LiFePO₄.

In the above chemical formulas, A is Ni, Co, Mn, or a combination thereof; B¹ is Al, Ni, Co, Mn, Cr, Fe, Mg, Sr, V, a rare earth element, or a combination thereof; D¹ is O, F, S, P, or a combination thereof; E is Co, Mn, or a combination thereof; F¹ is F, S, P, or a combination thereof; G is Al, Cr, Mn, Fe, Mg, La, Ce, Sr, V, or a combination thereof; Q is Ti, Mo, Mn, or a combination thereof; I¹ is Cr, V, Fe, Sc, Y, or a combination thereof; J is V, Cr, Mn, Co, Ni, Cu, or a combination thereof; and L¹ is Mn, Al, or a combination thereof.

According to an embodiment, the positive electrode active material may be a ternary lithium transition metal such as LiNiₓCo_{y}Al_{z}O₂ (NCA), LiNiₓCo_{y}Mn_{z}O₂ (NCM) (wherein 0<x<1, 0<y<1, 0<z<1, x+y+z=1).

Also, the compounds may have a coating layer on the surface, or may be mixed with another compound having a coating layer. The coating layer may include at least one coating element compound selected from an oxide of a coating element, a hydroxide of a coating element, an oxyhydroxide of a coating element, an oxycarbonate of a coating element, and a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be disposed in a method having no adverse influence on properties of a positive electrode active material by using these elements in the compound, and for example, the method may include any coating method such as spray coating, dipping, and the like, but is not illustrated in more detail because it is well-known in the related field.

In addition, as the coating layer, any known coating layer for the positive electrode active material of an all-solid-state battery may be applied, examples of which include Li₂O-ZrO₂ (LZO).

In addition, if the positive electrode active material includes nickel, cobalt and manganese, or nickel, cobalt and aluminum, the capacity density of the all-solid-state battery may be further improved and metal elution from the positive electrode active material in the charged state may be further reduced. Because of this, the long-term reliability and cycle characteristics of the all-solid-state battery may be further improved in a charged state.

The sulfur-based compound may be elemental sulfur (S₈), solid Li₂Sₙ (n≥1), catholyte including dissolved Li₂Sₙ (n≥1), an organosulfur compound, a carbon-sulfur polymer [(C₂Sₓ)ₙ, x = 2.5 to 50, n≥ 2), or a combination thereof.

Here, examples of the shape of the positive electrode active material include particle shapes such as spheres and ellipsoids. Additionally, the average particle diameter of the positive electrode active material is not particularly limited, and may be within a range applicable to the positive electrode active material of existing all-solid-state rechargeable batteries. Additionally, the amount of the positive electrode active material in the positive electrode active material layer is not particularly limited, and may be within a range applicable to the positive electrode layer of an existing all-solid-state rechargeable batteries.

The positive electrode active material layer may further include a solid electrolyte. The solid electrolyte included in the positive electrode active material layer may be the aforementioned solid electrolyte, and in this case, it may be the same as or different from the solid electrolyte included in the solid electrolyte layer. The solid electrolyte may be included in an amount of 10 wt% to 30 wt% based on a total weight of the positive electrode active material layer.

The current collector may include, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may be in the form of a foil or sheet.

The positive electrode active material layer may further include a binder and/or a conductive material.

The binder may include polyvinyl alcohol, carboxymethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but is not limited thereto.

The binder may be included in an amount of 0.1 wt% to 5 wt%, or 0.1 wt% to 3 wt%, based on a total weight of each component of the positive electrode for the all-solid-state battery, or based on a total weight of the positive electrode active material layer. Within the above amount range, the binder may sufficiently exhibit adhesive ability without deteriorating battery performance.

The conductive material is used to impart conductivity to the electrode, and any material that does not cause chemical change and conducts electrons may be used in the battery. Examples thereof may include a carbon-based material such as natural graphite, artificial graphite, carbon black, acetylene black, ketjen black, a carbon fiber, a carbon nanotube, and the like, a metal-based material including copper, nickel, aluminum, silver, etc. and in the form of a metal powder or a metal fiber, a conductive polymer such as a polyphenylene derivative, or a mixture thereof.

The conductive material may be included in an amount of 0.1 wt% to 5 wt%, or 0.1 wt% to 3 wt%, based on a total weight of each component of the positive electrode for the all-solid-state battery, or based on a total weight of the positive electrode active material layer. Within the above amount range, the conductive material may improve electrical conductivity without deteriorating battery performance.

A thickness of the positive electrode active material layer may be 90 µm to 200 µm. For example, the thickness of the positive electrode active material layer may be greater than or equal to 90 µm, greater than or equal to 100 µm, greater than or equal to 110 µm, greater than or equal to 120 µm, greater than or equal to 130 µm, greater than or equal to 140 µm, greater than or equal to 150 µm, greater than or equal to 160 µm, greater than or equal to 170 µm, greater than or equal to 180 µm, or greater than or equal to 190 µm, and less than or equal to 200 µm, less than or equal to 190 µm, less than or equal to 180 µm, less than or equal to 170 µm, less than or equal to 160 µm, less than or equal to 150 µm, less than or equal to 140 µm, less than or equal to 130 µm, less than or equal to 120 µm, or less than or equal to 110 µm. As described above, because the thickness of the positive electrode active material layer is thicker than that of the negative electrode active material layer, the capacity of the positive electrode is greater than that of the negative electrode.

The positive electrode may be manufactured by forming a positive electrode active material layer on a positive electrode current collector by dry or wet coating.

In an embodiment, a cushioning material may be additionally included to buffer thickness changes that occur if the all-solid-state battery is charged and discharged. The cushioning material may be present between the negative electrode and the case, and in the case of a battery in which one or more electrode assemblies are stacked, it may be present between different electrode assemblies.

The cushioning material may include a material that has an elastic recovery rate of 50% or more and may have an insulating function, and specifically includes silicone rubber, acrylic rubber, fluorine-based rubber, nylon, synthetic rubber, or a combination thereof. The cushioning material may be present in the form of a polymer sheet.

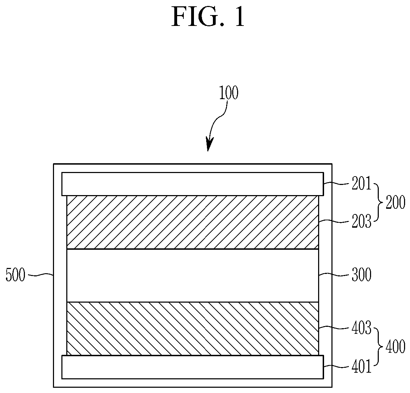

FIG. 1 is a cross-sectional view of an all-solid-state battery according to an embodiment. Referring to FIG. 1, the all-solid-state battery 100 includes an electrode assembly in which a negative electrode 400 including a negative electrode current collector 401 and a negative electrode catalyst layer 403, a solid electrolyte layer 300, and a positive electrode 200 including a positive electrode active material layer 203 and the positive electrode current collector 201 are stacked and a case such as a pouch housing the electrode assembly. The all-solid-state battery 100 may further include an elastic layer 500 on the outside of at least one of the positive electrode 200 and the negative electrode 400. Although FIG. 1 shows one electrode assembly including the negative electrode 400, the solid electrolyte layer 300, and the positive electrode 200, an all-solid-state battery may also be manufactured by stacking two or more electrode assemblies.

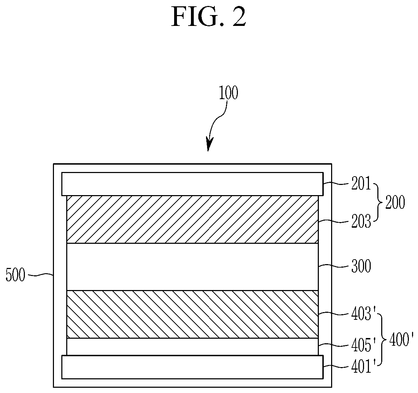

FIG. 2 schematically illustrates the structure of an all-solid-state battery in a charging state. An all-solid-state battery 100 includes a positive electrode 200 including a positive electrode current collector 201 and a positive electrode active material layer 203, a negative electrode 400' including a negative electrode current collector 401', a negative electrode catalyst layer 403', and a solid electrolyte layer 300 between the positive electrode 200 and the negative electrode 400', and a battery case 500 in which these are accommodated.

Additionally, lithium ions are deintercalated from the positive electrode active material and deposited on the negative electrode current collector 401', and as a result, a lithium-containing layer 405' is disposed between the current collector 401' and the negative electrode catalyst layer 403'.

An all-solid-state battery according to an embodiment may be manufactured by placing a negative electrode, a positive electrode, and a solid electrolyte layer between the negative electrode and the positive electrode, preparing a stack, and pressing the stack.

The pressing process may be performed in the range of 25 °C to 90 °C. Additionally, the pressing process may be performed by pressing at a pressure of less than or equal to 550 MPa, for example less than or equal to 500 MPa, for example 1 MPa to 500 MPa. The pressing time may vary depending on temperature and pressure, and may be, for example, less than 30 minutes. The pressing process may be, for example, an isostatic press, a roll press, or a plate press.

### MODE FOR PERFORMING THE INVENTION

Hereinafter, examples of the present invention and comparative examples are described. These examples, however, are not in any sense to be interpreted as limiting the scope of the invention.

### (Example 1)

### (1) Manufacturing of Negative Electrode

A negative electrode catalyst layer slurry was prepared by mixing 86.1 wt% of carbon black, 4.6 wt% of Ag having an average size of 60 nm, 1.0 wt% of montmorillonite (specific surface area: 250 m²/g), 2.8 wt% of carboxymethyl cellulose, and 5.5 wt% of styrene-butadiene rubber in water.

The prepared slurry was coated on a stainless steel foil current collector and then vacuum-dried at 80 °C to manufacture a negative electrode including a 12 µm-thick negative electrode catalyst layer and a 10 µm-thick current collector.

### (2) Manufacturing of Solid Electrolyte Layer

An isobutyryl isobutyrate binder solution (a solid content: 50 wt%) prepared by adding an acrylate-based polymer of butyl acrylate was added to an argyrodite-type solid electrolyte of Li₆PS₅Cl, and then, mixed. Here, the solid electrolyte and the binder were mixed in a weight ratio of 98.7: 1.3.

The mixing process was performed by using a Thinky mixer. Subsequently, 2 mm zirconia balls were added to the obtained mixture and then, stirred again by using a Thinky mixer to prepare slurry. The slurry was cast on a polytetrafluoroethylene release film and then, dried at room temperature to manufacture a 100 µm-thick solid electrolyte layer.

### (3) Fabricating of All-solid-state Half-cell

The manufactured negative electrode, solid electrolyte, and lithium metal counter electrode were sequentially stacked, and a pressure of 8 MPa was applied to fabricate an all-solid-state half-cell (torque half-cell).

### (Example 2)

A negative electrode was manufactured in the same manner as in Example 1, except that 82.1 wt% of carbon black, 4.6 wt% of Ag having an average size of 60 nm, 5.0 wt% of montmorillonite, 2.8 wt% of carboxymethyl cellulose, and 5.5 wt% of styrene-butadiene rubber were mixed in water.

The negative electrode, the solid electrolyte layer according to Example 1, and a lithium metal counter electrode were used to fabricate an all-solid-state half-cell.

### (Example 3)

A negative electrode was manufactured in the same manner as in Example 1, except that 77.1 wt% of carbon black, 4.6 wt% of Ag having an average size of 60 nm, 10.0 wt% of montmorillonite, 2.8 wt% of carboxymethyl cellulose, and 5.5 wt% of styrene-butadiene rubber were mixed in water.

The negative electrode, the solid electrolyte layer according to Example 1, and a lithium metal counter electrode were used to fabricate an all-solid-state half-cell.

### (Example 4)

A negative electrode was manufactured in the same manner as in Example 1, except that 68.0 wt% of carbon black, 3.7 wt% of Ag having an average size of 60 nm, 20.0 wt% of montmorillonite, 2.8 wt% of carboxymethyl cellulose, and 5.5 wt% of styrene-butadiene rubber were mixed in water.

The negative electrode, the solid electrolyte layer according to Example 1, and a lithium metal counter electrode were used to manufacture an all-solid-state half-cell.

### (Example 5)

A negative electrode was manufactured in the same manner as in Example 1, except that 58.0 wt% of carbon black, 3.7 wt% of Ag having an average size of 60 nm, 30.0 wt% of montmorillonite, 2.8 wt% of carboxymethyl cellulose, and 5.5 wt% of styrene-butadiene rubber were mixed in water.

The negative electrode, the solid electrolyte layer according to Example 1, and a lithium metal counter electrode were used to manufacture an all-solid-state half-cell.

### (Example 6)

A negative electrode was manufactured in the same manner as in Example 1, except that 68.0 wt% of carbon black, 3.7 wt% of Ag having an average size of 60 nm, 20.0 wt% of halloysite (specific surface area: 50 m²/g), 2.8 wt% of carboxymethyl cellulose, and 5.5 wt% of styrene-butadiene rubber were mixed in water.

The negative electrode, the solid electrolyte layer according to Example 1, and a lithium metal counter electrode were used to manufacture an all-solid-state half-cell.

### (Comparative Example 1)

A negative electrode was manufactured in the same manner as in Example 1, except that 87.1 wt% of carbon black, 4.6 wt% of Ag having an average size of 60 nm, 2.8 wt% of carboxymethyl cellulose, and 5.5 wt% of styrene-butadiene rubber were mixed in water.

The negative electrode, the solid electrolyte layer according to Example 1, and a lithium metal counter electrode were used to manufacture an all-solid-state half-cell.

### (Comparative Example 2)

A negative electrode was manufactured in the same manner as in Example 1, except that 81.7 wt% of carbon black, 10.0 wt% of montmorillonite, 2.8 wt% of carboxymethyl cellulose, and 5.5 wt% of styrene-butadiene rubber were mixed in water.

The negative electrode, the solid electrolyte layer according to Example 1, and a lithium metal counter electrode were used to manufacture an all-solid-state half-cell.

### (Comparative Example 3)

A negative electrode was manufactured in the same manner as in Example 1, except that 71.7 wt% of carbon black, 20.0 wt% of montmorillonite, 2.8 wt% of carboxymethyl cellulose, and 5.5 wt% of a styrene-butadiene rubber were mixed in water.

The negative electrode, the solid electrolyte layer according to Example 1, and a lithium metal counter electrode were used to manufacture an all-solid-state half-cell.

### (Reference Example 1)

A negative electrode was manufactured in the same manner as in Example 1, except that 53.0 wt% of carbon black, 3.7 wt% of Ag having an average size of 60 nm, 35.0 wt% of montmorillonite, 2.8 wt% of carboxymethyl cellulose, and 5.5 wt% of styrene-butadiene rubber were mixed in water.

The negative electrode, the solid electrolyte layer according to Example 1, and a lithium metal counter electrode were used to manufacture an all-solid-state half-cell.

### (Reference Example 2)

A negative electrode was manufactured in the same manner as in Example 1, except that 38.0 wt% of carbon black, 3.7 wt% of Ag having an average size of 60 nm, 50.0 wt% of montmorillonite, 2.8 wt% of carboxymethyl cellulose, and 5.5 wt% of styrene-butadiene rubber were mixed in water.

The negative electrode, the solid electrolyte layer according to Example 1, and a lithium metal counter electrode were used to manufacture an all-solid-state half-cell.

### Experimental Example 1) FE-SEM (field emission scanning electron microscope) Measurement

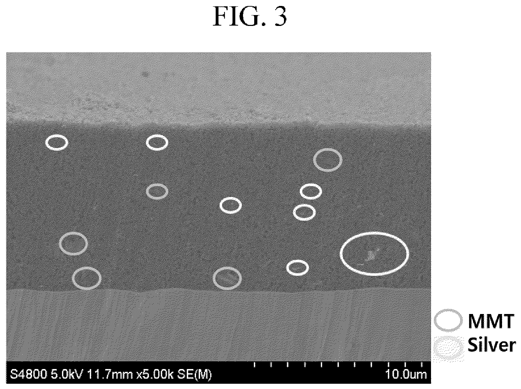

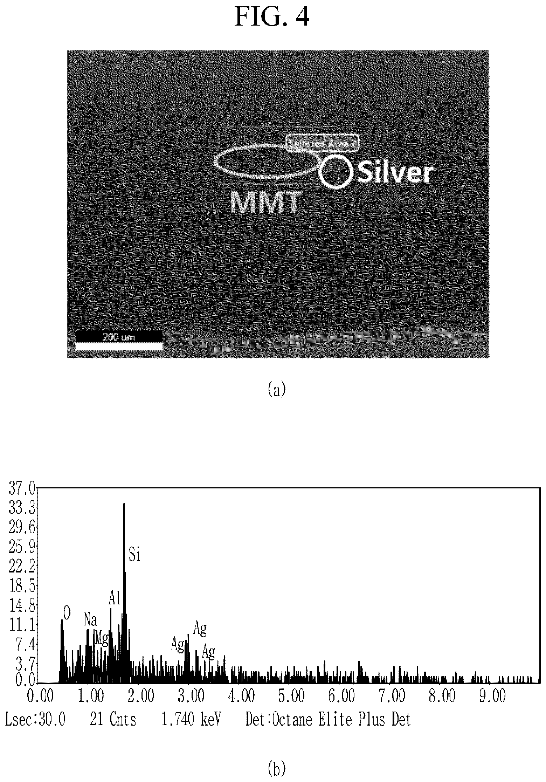

A cross-sectional FE-SEM image of the negative electrode manufactured in Example 1 is shown in FIG. 3. As shown in FIG. 4, montmorillonite exists in the negative electrode catalyst layer of the negative electrode.

### Experimental Example 2) EDAX (Energy-dispersive X-ray spectroscopy) Measurement

The negative electrode of Example 1 was cut into sections by using FIB (Focused Ion Beam) to analyze a cross-section shape and an element distribution analysis through energy dispersive x-ray spectroscopy (EDAX), and the results are respectively shown in (a) and (b) of FIG. 4.

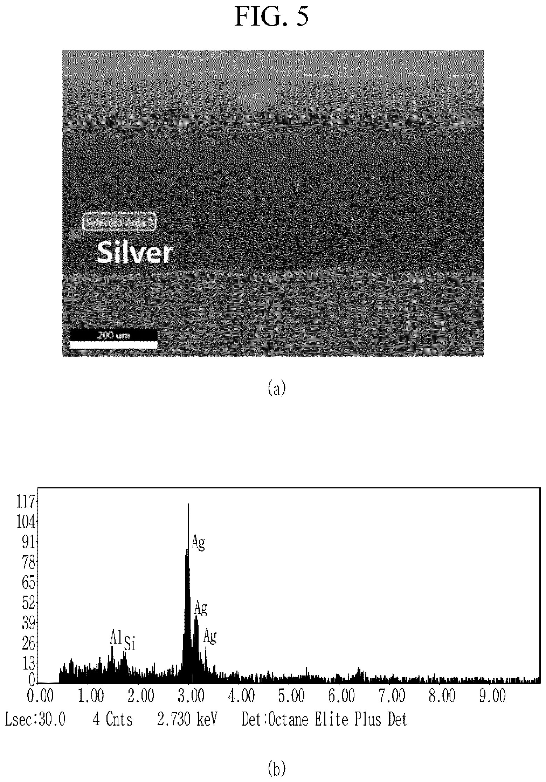

In addition, after analyzing the cross-section shape and element distribution of the negative electrode active material of Comparative Example 1 according to the energy dispersive x-ray spectroscopy (EDAX), the results are respectively shown in (a) and (b) of FIG. 5.

As shown in (a) of FIG. 4, the negative electrode of Example 1 was confirmed to contain montmorillonite (MMT) and silver, which was supported by the detection of O, Na, Mg, Al, Si, and Ag in the element analysis shown in (b) of FIG. 4.

On the contrary, the negative electrode of Comparative Example 1, as shown in (a) of FIG. 5, contained the silver alone, which was supported by the detection of Al, Si, and Ag alone in the element analysis shown in (b) of FIG. 5. In the result of (b) of FIG. 5, Al and Si were impurities.

### Experimental Example 3) Coulombic efficiency (C.E) Evaluation

The all-solid-state half-cells according to Examples 1 to 5 and Comparative Examples 2 and 3 were three times charged at 0.05 C. A percentage of discharge capacity to charge capacity at each cycle was calculated. The results are shown as C.E in Table 1.

### Experimental Example 4) Overvoltage Evaluation

The all-solid-state half-cells of Examples 1 to 5 and Comparative Examples 2 and 3 were three times charged and discharged under charge conditions of 0.05 C (0.27 mA) and 20 hours cut-off (SOC100, state of charge to reach 100% of charge capacity based on 100% of total battery charge capacity) and under discharge conditions of 0.27 mA (0.05 C) and 1.5 V cut-off. The cells were measured with respect to a voltage, which started to drop at OCV (open circuit voltage, about 2.5 V) up to a point where an inflection point occurred voltage at about 0 mV. The results at each cycle are shown as overvoltage in Table 1.

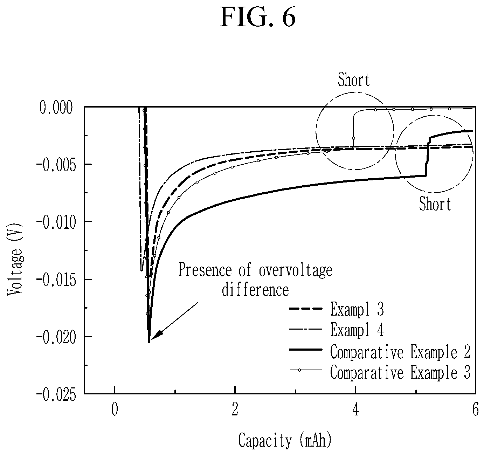

The 1^{st} result was shown at 1^{st} charge, and the 2^{nd} result was shown as the 2^{nd} cycle in Table 1. The first results are shown as 1^{st} charge, and the second results are shown as 2^{nd} cycle in Table 1. The results are shown in Table 1. In addition, among these results, the results of Examples 3 and 4 and Comparative Examples 2 and 3 are shown in FIG. 6.

**(Table 1)**

| | Weight ratio | | | 1^{st} charge | | 2^{nd} cycle | |
|---|---|---|---|---|---|---|---|
| | Carbon black | Ag | clay | Overvolta ge (mV) | Initial efficiency (%) | Overvolta ge (mV) | Efficiency (%) |
| Example 1 | 86.1 | 4.6 | 1 | 19.7 | 85.7 | 20.8 | 96.3 |
| Example 2 | 82.1 | 4.6 | 5 | 15.5 | 85.5 | 14.4 | 96.3 |
| Example 3 | 77.1 | 4.6 | 10 | 15.0 | 87.0 | 12.7 | 96.3 |
| Example 4 | 68.0 | 3.7 | 20 | 15.3 | 89.1 | 8.6 | 97.0 |
| Example 5 | 58.0 | 3.7 | 30 | 16.4 | 87.0 | 9.9 | 96.7 |
| Example 6 | 68.0 | 3.7 | 20 | 17.2 | 87.5 | 11.3 | 96.6 |
| Comparative Example 1 | 87.1 | 4.6 | 0 | 17.5 | 84.1 | 21.7 | 94.4 |
| Comparative Example 2 | 81.7 | 0 | 10 | 20.6 | Short | Short | Short |
| Comparative Example 3 | 71.7 | 0 | 20 | 19.6 | Short | Short | Short |
| Reference Example 1 | 61 | 4 | 35 | 17.3 | 82.1 | 8.8 | 92.2 |
| Reference Example 2 | 46 | 4 | 50 | 22.1 | 82.0 | Short | Short |

As shown in Table 1, the all-solid-state half-cells of Examples 1 to 5 exhibited excellent coulombic efficiency and overvoltage characteristics.

In Comparative Example 2 and 3 including MMT but no Ag in the negative electrode catalyst layer, an overcharge was measured during the first initial charge, but afterward, a short circuit occurred, making it impossible to measure coulombic efficiency. Accordingly, the all-solid-state half-cells of Comparative Examples 2 and 3 turned out to be difficult to use in practice. In addition, Comparative Examples 2 and 3, as shown FIG. 6, was clearly confirmed that a short circuit occurred.

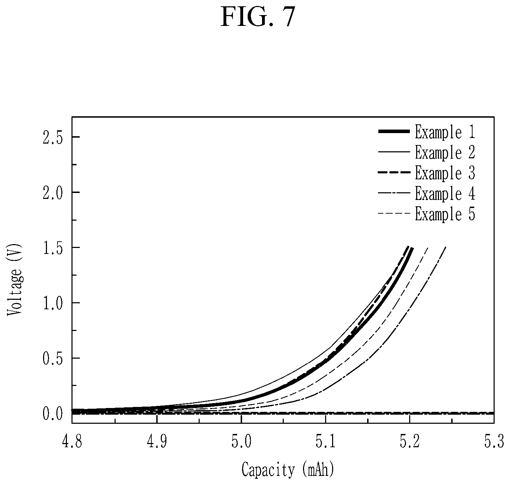

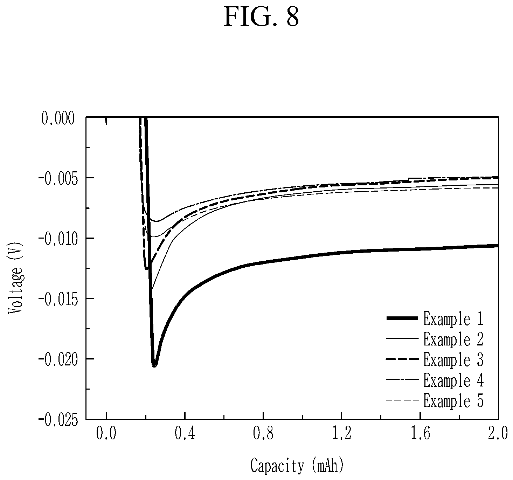

Furthermore, FIG. 7 is a graph showing discharge characteristics at the 2^{nd} cycle of Examples 1 to 5, and FIG. 8 is a graph showing their charge characteristics. In FIG. 7, the examples had an overall low overvoltage of about 20 mV, which confirmed excellent electrochemical characteristics. Similarly, FIG. 8 shows efficiency characteristics inversely proportional to an overvoltage size. In particular, Example 4 using 20 wt% of clay exhibited the most excellent effects. Referring to the results, the clay addition improved electrochemical performance during the charge/discharge.

While this disclosure has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

## Claims

1. A negative electrode for an all-solid-state battery, comprising
a current collector; and
a negative electrode catalyst layer located on the current collector and including amorphous carbon, a metal, and clay.

2. The negative electrode for an all-solid-state battery as claimed in claim 1, wherein
An amount of the clay is 1 wt% to 30 wt% based on 100 wt% of the total negative electrode catalyst layer.

3. The negative electrode for an all-solid-state battery as claimed in claim 1, wherein
An amount of the clay is 10 wt% to 25 wt% based on 100 wt% of the total negative electrode catalyst layer.

4. The negative electrode for an all-solid-state battery as claimed in claim 1, wherein
the clay is montmorilonite (MMT), halloysite, bentonite, kaolinite, saponite, surface-modified clay, pyrophylite-talc, fluorohectorite, vermiculite, illite, mica, brittle mica, or a combination thereof.

5. The negative electrode for an all-solid-state battery as claimed in claim 1, wherein the metal is Ag, Au, Sn, Zn, Al, Mg, Ge, Cu, In, Ni, Bi, Pt, Pd, or a combination thereof.

6. The negative electrode for an all-solid-state battery as claimed in claim 1, wherein the amorphous carbon includes carbon black, acetylene black, denka black, ketjen black, furnace black, activated carbon, or a combination thereof.

7. The negative electrode for an all-solid-state battery as claimed in claim 1, wherein the amorphous carbon includes carbon black, acetylene black, denka black, ketjen black, or a combination thereof.

8. The negative electrode for an all-solid-state battery as claimed in claim 1, wherein a BET specific surface area of the clay is 5 m²/g to 500 m²/g.

9. The negative electrode for an all-solid-state battery as claimed in claim 1, wherein an amount of the metal is 1 wt% to 50 wt% based on 100 wt% of the total weight of the negative electrode catalyst layer.

10. The negative electrode for an all-solid-state battery as claimed in claim 1, wherein an amount of the amorphous carbon is 20 wt% to 98 wt% based on 100 wt% of the total weight of the negative electrode catalyst layer.

11. An all-solid-state battery, comprising
the negative electrode as claimed in any one of claim 1 to claim 10;
a positive electrode; and
a solid electrolyte layer between the negative electrode and the positive electrode.

12. The all-solid-state battery as claimed in claim 11, wherein the negative electrode further includes a lithium-containing layer between the current collector and the negative electrode catalyst layer.
